# EUROPEAN PATENT APPLICATION

(11) **EP 4 628 564 A2**
(43) Date of publication of application: **08.10.2025**
(21) Application number: 25166596.4
(22) Date of filing: 27.03.2025
(51) Int. Cl.: C10M 141/10, C10M 169/04, C08F 10/02, C10N 30/06, C10N 40/00

(54) **LUBRICANT COMPOSITION AND METHOD OF PREPARING ETHYLENE-BASED POLYMER USING THE SAME**

(30) Priority: 02.04.2024 KR 20240044694
(71) Applicant: SK innovation Co., Ltd., Seoul 03188 (KR); SK Geo Centric Co., Ltd., Seoul 03188 (KR)
(72) Inventor: LEE, Ho Seong, 34124 Daejeon (KR); PARK, Ji Hye, 34124 Daejeon (KR); KIM, Won Bin, 34124 Daejeon (KR)
(74) Representative: Thoma, Michael

(57) **Abstract**

A lubricant composition according to embodiments of the present disclosure may include a base oil, a friction-reducing agent which includes oleic acid, and an antiwear agent which includes a phosphoric acid compound. The friction-reducing agent may be included in the lubricant composition in a predetermined amount such as an amount of 0.02 wt% to 0.9 wt% based on a total weight of the lubricant composition.

## Description

### [BACKGROUND OF THE INVENTION]

### 1. Field of the Invention

The present disclosure relates to a lubricant composition and a method of preparing an ethylene-based polymer using the same, and more specifically, to a lubricant composition including a base oil and a method of preparing an ethylene-based polymer using the lubricant composition.

### 2. Description of the Related Art

An ethylene-based polymer is utilized for various applications such as a sealing material, an adhesive, a packing material, an optical film and the like. The ethylene-based polymer may include, for example, an ethylene-carboxylic acid copolymer, an ethylene-(meth)acrylate copolymer, an ethylene-acetate copolymer, polyethylene and the like.

The ethylene-based polymer may be prepared by polymerizing ethylene and/or a comonomer (e.g., carboxylic acid, acrylate, acetate, etc.) through high-pressure equipment such as a pump, a compressor or the like.

However, due to a high reactivity of ethylene or comonomer, self-polymerization may occur when exposed to high temperature and pressure in a process of supplying the ethylene or comonomer to a reactor through the high-pressure equipment.

When the ethylene or comonomer is self-polymerized, equipment defects such as clogging, plugging, and flow path blocking of the above-described high-pressure equipment may occur. Therefore, a production yield of the copolymer may be decreased and it may be difficult to uniformly repeat the process.

Accordingly, methods of using an oxidation stabilizer together to suppress the equipment defects such as clogging, plugging, and flow path blocking are being studied. However, in order to effectively prevent the above-described equipment defects, a design or research for improving a wear resistance of the equipment is required.

### [SUMMARY OF THE INVENTION]

An object of the present disclosure is to provide a lubricant composition for implementing improved wear resistance, polymerization efficiency and process stability.

Another object of the present disclosure is to provide a method of preparing an ethylene-based polymer using the lubricant composition.

To achieve the above object, according to an aspect of the present invention, there is provided a lubricant composition including: a base oil; a friction-reducing agent which includes oleic acid; and an antiwear agent which includes a phosphoric acid compound, wherein a content of the friction-reducing agent is 0.02% by weight to 0.9% by weight based on a total weight of the lubricant composition.

In some embodiments, the base oil may include a white mineral oil.

In some embodiments, the content of the friction-reducing agent may be 0.1% by weight to 0.8% by weight based on the total weight of the lubricant composition.

In some embodiments, the phosphoric acid compound may include an amine group.

In some embodiments, the phosphoric acid compound may include a compound represented by Formula 1 below:

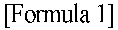

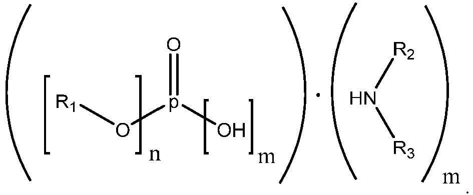

In Formula 1, R₁ to R₃ may be each independently an alkyl group having 1 to 30 carbon atoms.

In Formula 1, n and m may be each independently 1 or 2, and a sum of n and m may be 3.

In some embodiments, a content of the antiwear agent may be 0.01% by weight to 0.5% by weight based on the total weight of the lubricant composition.

In some embodiments, the content of the antiwear agent is 0.2% by weight to 0.4% by weight based on the total weight of the lubricant composition.

In some embodiments, the white mineral oil may have at least one of the following:
(a) a kinematic viscosity at 40°C of 20 mm²/s to 330 mm²/s or 50 mm²/s to 250 mm²/s or 100 mm²/s to 150 mm²/s, said viscosity measured according to the ASTM D 7279 standard,
(b) a flash point of 85 °C or 200 °C or higher, the flash point measured according to the ASTM D 92 standard,
(c) a boiling point of 200 °C or higher or 300 °C or higher, the boiling point measured according to the ASTM D 86 standard,
(d) a density at 20 °C of 0.800 g/cm³ to 0.900 g/cm³ or 0.850 g/cm³ to 0.890 g/cm³, the density may be measured according to the ASTM D 4052 standard.

In some embodiments, the content of the white mineral oil may be at least 98.0% by weight or at least 98.5% by weight or at least 98.9% by weight or at least 99.0% by weight or at least 99.5% by weight based on the total weight of the lubricant composition.

According to another aspect of the present invention, there is provided a method of preparing an ethylene-based polymer including: injecting the lubricant composition according to claim 1 into a compression device; moving a monomer for preparing an ethylene-based polymer which includes an ethylene monomer to a reactor through the compression device; and reacting the monomer for preparing an ethylene-based polymer in the reactor.

In some embodiments, the monomer for preparing an ethylene-based polymer may further include at least one selected from the group consisting of a carboxylic acid monomer, a (meth)acrylate monomer and an acetate monomer.

In some embodiments, the ethylene-based polymer may include at least one selected from the group consisting of an ethylene-carboxylic acid copolymer, an ethylene-(meth)acrylate copolymer, an ethylene-acetate copolymer and polyethylene.

In some embodiments, the compression device (50) may be kept at an internal temperature lower than an internal temperature of the reactor 70, wherein the internal temperature of the compression device (50) may be controlled to be from 20 °C to 120 °C or 30°C to 100 °C and the internal temperature of reactor (70) may be controlled to be 150°C to 270 °C or 180 °C to 250 °C.

In some embodiments, a copolymerization pressure inside the reactor (70) is controlled to be 1,100 bar to 2,500 bar or 1,300 bar to 2,300 bar, and/or a discharge pressure from the compression device (50) to the reactor (70) may be 2,000 bar to 3,500 bar or 2,300 bar to 3,000 bar.

According to another aspect of the present invention, there is provided a use of the ethylene-based polymer prepared above, for preparing a sealing material, an adhesive, a packing material or an optical film.

According to exemplary embodiments, the lubricant composition may include a friction-reducing agent and an antiwear agent. Accordingly, the wear resistance of a compression device due to direct contact of the monomer with the compression device may be improved, thereby preventing damage to the compression device.

Therefore, the process stability may be improved by preventing defects such as plugging of polymerization equipment, and the polymerization efficiency and yield of the ethylene-based polymer may be increased.

### [BRIEF DESCRIPTION OF THE DRAWINGS]

The above and other objects, features and other advantages of the present invention will be more clearly understood from the following detailed description taken in conjunction with the accompanying drawing, in which:

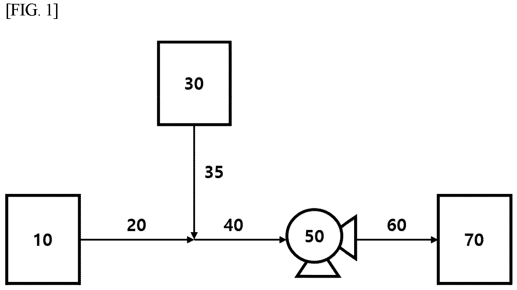

FIG. 1 is a schematic process flowchart for describing a method of preparing an ethylene-based polymer according to exemplary embodiments.

### [DETAILED DESCRIPTION OF THE INVENTION]

The embodiments of the present disclosure provide a lubricant composition including a base oil, a friction-reducing agent and an antiwear agent.

In addition, the embodiments of the present disclosure provide a method of preparing an ethylene-based polymer using the lubricant composition.

The term "(meth)acrylic acid" as used herein is used as a meaning of including both acrylic acid and methacrylic acid.

The term "(meth)acrylate" as used herein is used as a meaning of including both acrylate and methacrylate.

Hereinafter, the present disclosure will be described in detail with reference to the accompanying drawings. However, the embodiments are merely illustrative and the present disclosure is not limited to the specific embodiments described by way of example, and it will be understood by those skilled in the art that the present disclosure is to cover all modifications, equivalents, and alternatives falling within the spirit and scope of the present disclosure.

A lubricant composition according to exemplary embodiments may include a base oil, a friction-reducing agent and an antiwear agent.

The base oil may be included as a solvent of the lubricant composition. For example, the base oil may be included as a plasticizer, a diluent or media. Due to the base oil, an increase in friction inside polymerization equipment, a petrochemical facility, etc., and an increase in temperature and pressure inside the equipment caused by the increased friction may be prevented.

In some embodiments, the base oil may include a white mineral oil. The white mineral oil is a type of refined non-polar hydrocarbon. The white mineral oil is applied to various industries such as pharmaceuticals, cosmetics, agriculture, and food due to a high stability thereof. For example, the white mineral oil may be included as the base oil. Accordingly, the lubricant composition may be suitably used in the preparation of a copolymer used in various industrial fields.

For example, the white mineral oil may have a viscosity (kinematic viscosity) at 40 °C of 20 mm²/s to 330 mm²/s, 50 mm²/s to 310 mm²/s, 50 mm²/s to 250 mm²/s, 100 mm²/s to 250 mm²/s, 100 mm²/s to 220 mm²/s, or 100 mm²/s to 150 mm²/s, or 100 mm²/s to 120 mm²/s. Within the above range, the lubricant composition and a monomer may come into uniformly contact with each other. Accordingly, the friction reduction performance and polymerization inhibition performance may be enhanced. The viscosity may be measured according to the ASTM D 7279 standard.

In some embodiments, the white mineral oil may have a flash point of 85 °C or higher, 88 °C or higher, 90 °C or higher, 93 °C or higher, or 200 °C or higher. In some embodiments, the white mineral oil may have a flash point of 135 °C or lower, 130 °C or lower, 125 °C or lower, 120 °C or lower, or 115 °C or lower. The flash point may be measured according to the ASTM D 92 standard. Within the above range, the stability of the lubricant composition may be further improved.

In some embodiments, the white mineral oil may have a boiling point of 200 °C or higher, 210 °C or higher, 220 °C or higher, 230 °C or higher, or 300 °C or higher. In some embodiments, the white mineral oil may have a boiling point of 600 °C or lower, 550 °C or lower, 500 °C or lower, 450 °C or lower, 400 °C or lower. The boiling point may be measured according to the ASTM D 86 standard.

In some embodiments, the white mineral oil may have a density at 20°C of 0.800 g/cm³ to 0.900 g/cm³, 0.820 g/cm³ to 0.900 g/cm³, 0.850 g/cm³ to 0.900 g/cm³, 0.850 g/cm³ to 0.890 g/cm³, or 0.860 g/cm³ to 0.890 g/cm³. Within the above range, the oxidation stabilizer may be more easily dissolved, and the oxidation stabilizer may come into more uniformly contact or be mixed with a radical reactive monomer. Accordingly, self-polymerization between the monomers by a radical active substance may be effectively inhibited. The density may be measured according to the ASTM D 4052 standard.

The base oil may be included as a balance of the lubricant composition except for the components described below.

The term "balance" as used herein indicates a variable amount that is adjusted depending on the components added. For example, the term "balance" as used herein may indicate an amount except for contents of components additionally included in the lubricant composition, such as a friction-reducing agent and an antiwear agent.

The friction-reducing agent is an amphiphilic substance that can reduce friction between the metals when they come into contact with each other. The friction-reducing agent may reduce friction between the metals by interacting a polar portion of the friction-reducing agent with the metal and arranging a nonpolar portion thereof outside the metal surface, for example.

In exemplary embodiments, the friction-reducing agent may include oleic acid. The oleic acid is a type of fatty acid that can reduce friction due to contact between the metals.

In some embodiments, the friction-reducing agent may include stearic acid, linoleic acid, glyceryl trioleate and the like. The stearic acid and trioleic acid, which are types of fatty acids, may be included as the friction-reducing agent to reduce friction between the metals.

In exemplary embodiments, a content of the friction-reducing agent may be 0.02% by weight ("wt%") to 0.9 wt% based on a total weight of the lubricant composition. For example, the content of the oleic acid may be included in the lubricant composition within the above content range.

If the friction-reducing agent is included in a content of exceeding 0.9 wt% based on the total weight of the lubricant composition, effectiveness of each compound may be decreased due to a competitive reaction between the friction-reducing agent and the antiwear agent. In this case, a frictional heat of the equipment may promote the radical reactivity of the radical reactive monomer (for example, a polar monomer such as ethylene, carboxylic acid, (meth)acrylate, acetate, etc.), thereby causing the monomer to be self-polymerized. Therefore, defects such as a reduction in a lifespan of production equipment and clogging of a process device may occur.

If the content of the friction-reducing agent is less than 0.02 wt% based on the total weight of the lubricant composition, the friction-reducing agent may not be sufficiently applied to the metal surface, thereby causing a decrease in the wear resistance of the equipment. In this case, the frictional heat of the equipment may promote the radical reactivity of the radical reactive monomer (e.g., polar monomers such as ethylene, carboxylic acid, (meth)acrylate, acetate, etc.), thereby causing the monomer to be self-polymerized. Therefore, defects such as a reduction in lifespan of the production equipment and clogging of the process device may occur.

When the content of the friction-reducing agent is 0.02 wt% to 0.9 wt% based on the total weight of the lubricant composition, defects in the process device are prevented while friction within the equipment is effectively suppressed, such that the yield and process efficiency of the ethylene-based polymer may be improved.

In some embodiments, the content of the friction-reducing agent may be 0.09 wt% to 0.9 wt%, 0.1 wt% to 0.9 wt%, 0.1 wt% to 0.8 wt%, 0.1 wt% to 0.5 wt%, or 0.1 wt% to 0.3 wt%. For example, the content of the oleic acid may be included in the lubricant composition within the above content range. Within the above content range, defects of the process device may be more effectively prevented, and the yield and process efficiency of the ethylene-based polymer may be more improved.

In exemplary embodiments, the antiwear agent may include a phosphoric acid compound. By using an antiwear agent including the phosphoric acid compound, wear caused by high-pressure friction of the process device, etc. may be reduced. Accordingly, process defects may be reduced, and process stability and process efficiency may be improved.

In some embodiments, the phosphoric acid compound may include an amine group. Thereby, the wear prevention performance of the antiwear agent including the phosphoric acid compound may be further improved. Accordingly, damage to the compression device may be further reduced, and process stability, polymerization efficiency of the ethylene-based polymer, and yield may be further improved.

In some embodiments, the phosphoric acid compound may include a compound represented by Formula 1 below.

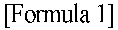

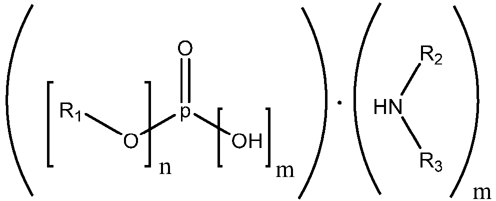

In Formula 1, R₁ to R₃ may each independently be an alkyl group having 1 to 30, 1 to 25, or 5 to 20 carbon atoms.

The term "alkyl group" as used herein is used as a meaning of including both substituted and unsubstituted alkyl groups.

The term "substituted" as used herein may mean that at least one of the hydrogen atoms of the compound is substituted with a substituent such as a halogen group, a hydroxyl group, a heteroalkyl group, a heterocycloalkyl group, a heteroaryl group, an amine group, a nitrile group, a nitro group, a silyl group, etc.

The term "unsubstituted" as used herein may mean that all the hydrogen atoms of the compound are not substituted.

In Formula 1, n and m may be each independently 1 or 2, and a sum of n and m may be 3. For example, when n is 1, m may be 2. For example, when n is 2, m may be 1.

By including the compound represented by Formula 1 as the antiwear agent, the wear resistance of, for example, a compression device, etc. may be improved. Accordingly, process defects may be prevented.

In some embodiments, the content of the antiwear agent may be 0.01 wt % to 0.5 wt %, 0.03 wt % to 0.5 wt %, or 0.03 wt % to 0.4 wt % based on the total weight of the lubricant composition. For example, the phosphoric acid compound may be included in the lubricant composition within the above content range. Within the content range, damage to the compression device that can occur when the radical reactive monomer directly comes into contact with the compression device under high pressure conditions through the antiwear agent may be reduced. Accordingly, process stability may be improved.

In one embodiment, the content of the antiwear agent may be 0.1 wt% to 0.4 wt%, 0.2 wt% to 0.4 wt%, or 0.25 wt% to 0.35 wt% based on the total weight of the lubricant composition. For example, the phosphoric acid compound may be included in the lubricant composition within the above content range. Within the above content range, damage to the compression device may be further reduced through the antiwear agent. Accordingly, process stability may be further improved.

FIG. 1 is a schematic process flowchart for describing a method of preparing an ethylene-based polymer according to exemplary embodiments.

Referring to FIG. 1, a first monomer including an ethylene monomer may be supplied from a first monomer supply unit 10. For example, the first monomer may be moved from the first monomer supply unit 10 to a compression device 50 through a first flow path 20.

In one embodiment, an additive such as a stabilizer, a reaction inhibitor, etc. may be supplied together with the first monomer. For example, the stabilizer and the reaction inhibitor may include at least one selected from the group of a primary antioxidant including a phenolic or amine-based substance and a secondary antioxidant including a phosphorus or sulfur-based substance.

In some embodiments, a second monomer including a comonomer may be supplied from a second monomer supply unit 30. For example, the second monomer may be supplied as a comonomer from the second monomer supply unit 30. For example, the second monomer may be moved through a second flow path 35 and come into contact with the first monomer supplied through the first flow path 20.

The second monomer including the comonomer may include a carboxylic acid monomer, a (meth)acrylate monomer, or an acetate monomer of which a chain polymerization reaction is possible. For example, the comonomer may include at least one selected from the group consisting of a carboxylic acid monomer, a (meth)acrylate monomer and an acetate monomer.

In some embodiments, (meth)acrylic acid may be used as the carboxylic acid monomer. In some embodiments, (meth)acrylate or alkyl(meth)acrylate may be used as the (meth)acrylate monomer. In some embodiments, vinyl acetate may be used as the acetate monomer.

A mixture of the first monomer and the second monomer may be moved to the compression device 50 through an injection flow path 40 and discharged through a discharge flow path 60 to be injected into a reactor 70 for polymerization/copolymerization. For example, a first monomer including an ethylene monomer may be injected into the reactor 70 through the compression device 50 as a monomer for preparing an ethylene-based polymer. For example, a second monomer including at least one selected from the group consisting of a carboxylic acid monomer, a (meth)acrylate monomer, and an acrylate monomer may be injected into the reactor 70 through the compression device 50 as a comonomer for preparing an ethylene-based polymer.

The compression device 50 may include, for example, discharge equipment such as a pump, a compressor, etc. The above-described lubricant composition may be injected into the compression device 50.

For example, the compression device 50 may include a cylinder structure such as a piston and a bushing which surrounds the piston. The above-described lubricant composition may be injected into a gap between the piston and the cylinder structure.

As friction occurs repeatedly between the piston and the cylinder structure inside the gap, if a local polymerization temperature exceeds a predetermined level due to frictional heat, a self-polymer such as poly(acrylic acid (PAA) may be generated, for example. The gap may be clogged by the self-polymer, thereby shortening an exchange cycle or cleaning cycle of the compression device 50. Accordingly, the process efficiency may be reduced, and the yield of the ethylene-based polymer may be decreased.

According to exemplary embodiments, the above-described lubricant composition is used such that friction is reduced even under high temperature and high pressure conditions, and thus self-polymerization of the monomer due to frictional heat may be suppressed. Accordingly, the exchange cycle or cleaning cycle of the compression device 50 may be increased, and the equipment lifespan may be improved.

According to exemplary embodiments, the monomer for preparing an ethylene-based polymer may be reacted in the reactor 70 to prepare the ethylene-based polymer. For example, the first monomer including an ethylene monomer and the second monomer including a comonomer may be reacted in the reactor 70 to prepare the ethylene-based polymer.

In some embodiments, an internal temperature of the compression device 50 may be lower than an internal temperature of the reactor 70. For example, the internal temperature of the compression device 50 may be 20 °C to 120 °C, or 30 °C to 120 °C, or 30 °C to 100 °C. For example, the internal temperature of reactor 70 may be 150 °C to 270 °C, 180 °C to 270 °C, or 180 °C to 250 °C.

For example, a copolymerization pressure inside the reactor 70 may be 1,100 bar to 2,500 bar, 1,300 bar to 2,500 bar, or 1,300 bar to 2,300 bar. For example, a discharge pressure from the compression device 50 to the reactor 70 may be 2,000 bar to 3,500 bar, 2,300 bar to 3,500 bar, or 2,300 bar to 3,000 bar.

In some embodiments, the discharge pressure from the compression device 50 to the reactor 70 may be greater than the copolymerization pressure inside the reactor 70. For example, within the above pressure range, the discharge pressure from the compression device 50 to the reactor 70 may be greater than the copolymerization pressure inside the reactor 70.

In some embodiments, the ethylene-based polymer may include at least one selected from the group consisting of an ethylene-carboxylic acid copolymer, an ethylene-(meth)acrylate copolymer, an ethylene acetate copolymer and polyethylene.

For example, when ethylene is used as the first monomer and the second monomer is not used, polymerization between ethylene monomers may be performed in the reactor 70 to prepare polyethylene.

For example, an ethylene monomer may be used as the first monomer and a carboxylic acid monomer may be used as the second monomer. Copolymerization of the ethylene monomer and the carboxylic acid monomer may be performed in the reactor 70 to prepare an ethylene-carboxylic acid copolymer (e.g., an ethylene-acrylic acid (EAA) copolymer).

For example, the ethylene monomer may be used as the first monomer, and a (meth)acrylate monomer may be used as the second monomer. Copolymerization of the ethylene monomer and the (meth)acrylate monomer may be performed in the reactor 70 to prepare an ethylene-(meth)acrylate copolymer (e.g., an ethylene-acrylate (EA) copolymer).

For example, the ethylene monomer may be used as the first monomer, and an acetate monomer may be used as the second monomer. Copolymerization of the ethylene monomer and the acetate monomer may be performed in the reactor 70, such that an ethylene-acetate copolymer (e.g., an ethylene vinyl acetate (EVA) copolymer) may be prepared.

In some embodiments, a chain transfer agent may be added during the copolymerization process. A molecular weight and molecular weight distribution of the polymer product may be easily controlled within a desired range through the chain transfer agent. The chain transfer agent may include, for example, a nonpolar organic compound such as isobutane or propene, etc., or a polar organic compound such as methyl ethyl ketone or isopropylaldehyde.

Hereinafter, embodiments provided in the present application will be further described with reference to specific experimental examples. However, the following experimental examples only illustrate the present disclosure and are not intended to limit the appended claims, and those skilled in the art will obviously understand that various alterations and modifications are possible within the scope and spirit of the present disclosure. Such alterations and modifications are duly included in the appended claims.

### Examples and Comparative Examples

### Example 1

A lubricant composition was prepared by mixing 99.6 wt% of white mineral oil as a base oil, 0.1 wt% of oleic acid as a friction-reducing agent, and 0.3 wt% of a phosphoric acid compound (Irgalube 349, BASF) as an antiwear agent.

### Examples 2 to 5 and Comparative Examples 1 to 5

Lubricant compositions were prepared in the same manner as in Example 1, except that the contents of the base oil (white mineral oil), the friction-reducing agent (oleic acid), and the antiwear agent (Irgalube 349) were changed as listed in Table 1 below.

**[TABLE 1]**

| Item | Component of lubricant composition | | |
|---|---|---|---|
| | White mineral oil (wt%) | Oleic acid (wt%) | Irgalube 349 (wt%) |
| Example 1 | 99.6 | 0.1 | 0.3 |
| Example 2 | 99.4 | 0.1 | 0.5 |
| Example 3 | 99.8 | 0.1 | 0.1 |
| Example 4 | 99.87 | 0.1 | 0.03 |
| Example 5 | 98.9 | 0.8 | 0.3 |
| Comparative example 1 | 97 | 3 | 0 |
| Comparative example 2 | 98.5 | 1 | 0.5 |
| Comparative example 3 | 99.5 | 0 | 0.5 |
| Comparative example 4 | 99.685 | 0.015 | 0.3 |
| Comparative example 5 | 99.695 | 0.005 | 0.3 |

### Experimental Example: Evaluation of wear resistance

Wear resistances of the lubricant compositions prepared according to the examples and comparative examples were evaluated. The wear resistance was determined by measuring a wear diameter (Wear Scar Diameter, WSD) using a 4-ball wear tester according to the ASTM D 4172-94 standard.

Measurement results are shown in Table 2 below.

**[TABLE 2]**

| Item | WSD (mm) |
|---|---|
| Example 1 | 0.333 |
| Example 2 | 0.683 |
| Example 3 | 0.405 |
| Example 4 | 0.433 |
| Example 5 | 0.388 |
| Comparative example 1 | 0.833 |
| Comparative example 2 | 1.438 |
| Comparative example 3 | 1.299 |
| Comparative example 4 | 1.216 |
| Comparative example 5 | 1.299 |

Referring to Tables 1 and 2, in the examples where oleic acid was included as the friction-reducing agent in an amount of 0.02 wt% to 0.9 wt% based on the total weight of the lubricant composition, the WSD was 0.683 mm or less.

In Example 2 where the content of the antiwear agent (phosphoric acid compound; Irgalube 349) was increased, the WSD was increased compared to Example 1.

In Examples 3 and 4 where the content of the antiwear agent (phosphoric acid compound; Irgalube 349) was decreased, the WSD was increased compared to Example 1.

In Example 5 where the content of the friction-reducing agent (oleic acid) was increased, the WSD was increased compared to Example 1.

In comparative examples where the oleic acid was included as a friction-reducing agent in an amount less than 0.02 wt% or greater than 0.9 wt% based on the total weight of the lubricant composition, the WSD was increased.

### [Description of Reference Numerals]

10: First monomer supply unit
20: First flow path
30: Second monomer supply unit
35: Second flow path
40: Injection flow path
50: Compression device
60: Discharge flow path
70: Reactor

## Claims

1. A lubricant composition comprising:
a base oil;
a friction-reducing agent which comprises oleic acid; and
an antiwear agent which comprises a phosphoric acid compound,
wherein a content of the friction-reducing agent is 0.02% by weight to 0.9% by weight based on a total weight of the lubricant composition.

2. The lubricant composition according to claim 1, wherein the base oil comprises a white mineral oil.

3. The lubricant composition according to claims 1 or 2, wherein the content of the friction-reducing agent is 0.1% by weight to 0.8% by weight based on the total weight of the lubricant composition.

4. The lubricant composition according to claims 1 to 3, wherein the phosphoric acid compound comprises an amine group.

5. The lubricant composition according to claim 4, wherein the phosphoric acid compound comprises a compound represented by Formula 1 below: 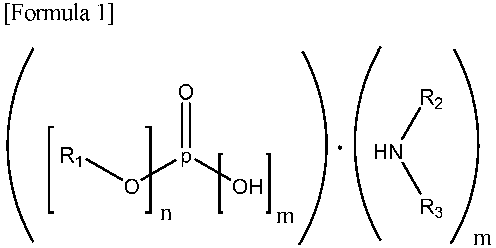 wherein in Formula 1, R₁ to R₃ are each independently an alkyl group having 1 to 30 carbon atoms, n and m are each independently 1 or 2, and a sum of n and m is 3.

6. The lubricant composition according to claims 1 to 5, wherein a content of the antiwear agent is 0.01% by weight to 0.5% by weight based on the total weight of the lubricant composition.

7. The lubricant composition according to claim 6, wherein the content of the antiwear agent is 0.2% by weight to 0.4% by weight based on the total weight of the lubricant composition.

8. The lubricant of claim 2 or any one of the claims depending on claim 2, wherein the white mineral oil has at least one of the following:
(a) a kinematic viscosity at 40 °C of 20 mm²/s to 330 mm²/s or 50 mm²/s to 250 mm²/s or 100 mm²/s to 150 mm²/s, said viscosity measured according to the ASTM D 7279 standard,
(b) a flash point of 85 °C or 200 °C or higher, the flash point measured according to the ASTM D 92 standard,
(c) a boiling point of 200 °C or higher or 300 °C or higher, the boiling point measured according to the ASTM D 86 standard,
(d) a density at 20 °C of 0.800 g/cm³ to 0.900 g/cm³ or 0.850 g/cm³ to 0.890 g/cm³, the density may be measured according to the ASTM D 4052 standard.

9. The lubricant of claim 2 or any one of the claims depending on claim 2, wherein the content of the white mineral oil is at least 98.0% by weight or at least 98.5% by weight or at least 98.9% by weight or at least 99.0% by weight or at least 99.5% by weight based on the total weight of the lubricant composition.

10. A method of preparing an ethylene-based polymer comprising:
injecting the lubricant composition according to claims 1 to 9 into a compression device (50);
moving a monomer for preparing an ethylene-based polymer which comprises an ethylene monomer to a reactor (70) through the compression device (50); and
reacting the monomer for preparing an ethylene-based polymer in the reactor (70).

11. The method of preparing an ethylene-based polymer according to claim 10, wherein the monomer for preparing an ethylene-based polymer further comprises at least one selected from the group consisting of a carboxylic acid monomer, a (meth)acrylate monomer and an acetate monomer.

12. The method of preparing an ethylene-based polymer according to claims 10 or 11, wherein the ethylene-based polymer comprises at least one selected from the group consisting of an ethylene-carboxylic acid copolymer, an ethylene-(meth)acrylate copolymer, an ethylene-acetate copolymer and polyethylene.

13. The method of preparing an ethylene-based polymer according to any one of claims 10 to 12, wherein the compression device (50) is kept at an internal temperature lower than an internal temperature of the reactor 70, wherein the internal temperature of the compression device (50) is controlled to be from 20 °C to 120 °C or 30 °C to 100 °C and the internal temperature of reactor (70) is controlled to be 150 °C to 270 °C or 180 °C to 250 °C.

14. The method of preparing an ethylene-based polymer according to any one of claims 10 to 13, wherein a copolymerization pressure inside the reactor (70) is controlled to be 1,100 bar to 2,500 bar or 1,300 bar to 2,300 bar, and/or a discharge pressure from the compression device (50) to the reactor (70) may be 2,000 bar to 3,500 bar or 2,300 bar to 3,000 bar.

15. Use of the ethylene-based polymer prepared according to any one of claims 10 to 14, for preparing a sealing material, an adhesive, a packing material or an optical film.
